# EUROPEAN PATENT APPLICATION

(11) **EP 4 741 767 A1**
(43) Date of publication of application: **13.05.2026**
(21) Application number: 25213580.1
(22) Date of filing: 05.11.2025
(51) Int. Cl.: G01C 21/20, G01C 21/34, G01W 1/10, G06N 3/08, G06N 20/00

(54) **VEHICLE ROUTE WEATHER FORECASTING AND NAVIGATION**

(30) Priority: 12.11.2024 US 202418945204
(71) Applicant: Fujitsu Limited, Kawasaki-shi, Kanagawa 211-8588 (JP)
(72) Inventor: HAZARIKA, Subhashis, Santa Clara, California, 94054 (US); WONG, Hon Yung, Santa Clara, California, 94054 (US)
(74) Representative: Hoffmann Eitle

(57) **Abstract**

According to an aspect of an embodiment, a method may include obtaining first real-time observational data corresponding to current conditions within an operational area of a vehicle, the first real-time observational data corresponding to the operational area of the vehicle. A first forecast of one or more weather conditions associated with the operational area of the vehicle may be generated using an artificial intelligence (AI) forecasting model and based on the first real-time observational data. The first forecast may be tailored for and according to the operational area of the vehicle. The method may include generating navigation routes for the vehicle in the operational area based on the first forecast, the vehicle navigating the operational area according to the navigation routes.

## Description

### FIELD

The embodiments discussed in the present disclosure are related to routing vehicles based on customized weather forecasting.

### BACKGROUND

Vehicle weather routing involves planning a vehicle's course based on current and/or forecasted weather conditions to avoid adverse weather conditions and/or to optimize fuel efficiency. The quality of the forecasted weather for an operational area for the vehicle route planning may greatly affect the efficacy of the resulting route.

The subject matter claimed herein is not limited to embodiments that solve any disadvantages or that operate only in environments such as those described above. Rather, this background is only provided to illustrate one example technology area where some embodiments described herein may be practiced.

### SUMMARY

According to an aspect of an embodiment, a method may include obtaining first real-time observational data corresponding to current conditions within an operational area of a vehicle, the first real-time observational data being obtained based on the first real-time observational data corresponding to the operational area of the vehicle. A first forecast of one or more weather conditions associated with the operational area of the vehicle may be generated using an artificial intelligence (AI) forecasting model and based on the first real-time observational data. The first forecast may be tailored for and according to the operational area of the vehicle. The method may further include generating one or more navigation routes for the vehicle in the operational area based on the first forecast, the vehicle navigating the operational area according to the one or more navigation routes.

The object and advantages of the embodiments will be realized and achieved at least by the elements, features, and combinations particularly pointed out in the claims. It is to be understood that both the foregoing general description and the following detailed description are exemplary and explanatory and are not restrictive of the invention, as claimed.

### BRIEF DESCRIPTION OF THE DRAWINGS

Example embodiments will be described and explained with additional specificity and detail through the use of the accompanying drawings in which:
FIG. 1 illustrates an example system configured to generate navigational routes for a vessel, in accordance with at least one embodiment of the present disclosure;
FIG. 2 a flow diagram of an example method of data assimilation, arranged in accordance with one or more embodiments of the present disclosure;
FIG. 3 illustrates a flow chart of an example method of weather forecasting and route determination, arranged in accordance with at least one embodiment of the present disclosure; and
FIG. 4 illustrates a block diagram of an example computing system that may be used with a weather forecasting and route determination system, in accordance with one or more embodiments of the present disclosure.

### DESCRIPTION OF EMBODIMENTS

Vehicles may travel along navigational routes to reach a destination. Navigational routes refer to pathways or directions that guide the vehicles or operators of the vehicles from a first location to a second location. Vehicles include any means of transportation that is designed to carry people or goods from one place to another. For example, the vehicles may include various types, such as ships, boats, automobiles, trucks, buses, bicycles, trains, aircraft, motorcycles, off-highway vehicles, etc. The navigational routes may vary depending on the types of the vehicles. For example, the navigational routes may include waterways, roadways, railways, air routes, off-road trails, etc. The navigational routes are determined based on various factors such as weather conditions, traffic conditions, road conditions, vehicle types, etc.

As an example, vessels such as ships may navigate water bodies based on navigational routes. The navigational routes may correspond to various routes and/or ways that the vessels may follow to reach a destination location. In some circumstances, the navigational routes may be determined based on weather conditions, such as storms, winds, waves, tides, etc. Determining the navigational routes and other maritime operations based on weather conditions may help the vessels avoid hazardous areas, reduce fuel consumption, and/or minimize risk of delays and/or damages to cargo. Additionally, the navigational routes determined based on the weather conditions may help improve efficiency of the navigational routes such that greenhouse gas emissions may be reduced.

The weather conditions for future or upcoming areas and/or times may be forecasted or predicted, such that the navigational routes may be determined considering the weather conditions. For instance, the weather conditions corresponding to the areas between the vessel and the destination location may be forecasted for the times of travel for the vessels. Such forecasted weather conditions may be used in the route planning to identify and/or determine optimized navigational routes.

However, forecasting the weather conditions at various locations (e.g., on the sea) may be limited in how effectively real-time weather conditions at specific locations may be accurately forecasted. For instance, vessels and/or routing systems generally rely on external sources for weather condition forecasts. Such external sources provide the weather condition forecasts for areas in general that may lack specificity for specific areas associated with the vessels. Additionally, incorporating new observations and/or data in real-time may be challenging due to use of complex models that demand significant computational resources. Further, the amount of time between forecasts from such external sources may be in the order of hours or days (e.g., due to the significant computations used) such that real-time forecasts based on real-time conditions may be limited.

According to one or more embodiments of the present disclosure, a weather forecasting and route determination system may be configured in a manner to allow determination and/or adaptive modification of navigational routes based on real-time observational data. In particular, as described in detail in the present disclosure, the weather forecasting and route determination system may be configured such that the system utilizes an artificial intelligence (AI) forecasting model configured to generate weather condition forecasts. In particular, the AI forecasting model may generate the weather condition forecasts based on the real-time observational data. Such use of the AI forecasting model may help generate weather condition forecasts that are timely and localized.

The weather condition forecasts may be used to improve route planning. For example, the weather condition forecasts may provide hazard awareness (e.g., aware of upcoming hazardous areas), route adjustment (e.g., modify routes to avoid regions with bad or unsafe weather conditions), fuel efficiency (e.g., avoid regions that require more energy to get through such as water bodies with higher waves), etc. Weather condition forecasts generated based on the real-time observational data may help determine navigational routes that are safter and provide improved fuel efficiency.

Embodiments of the present disclosure will be explained with reference to the accompanying drawings.

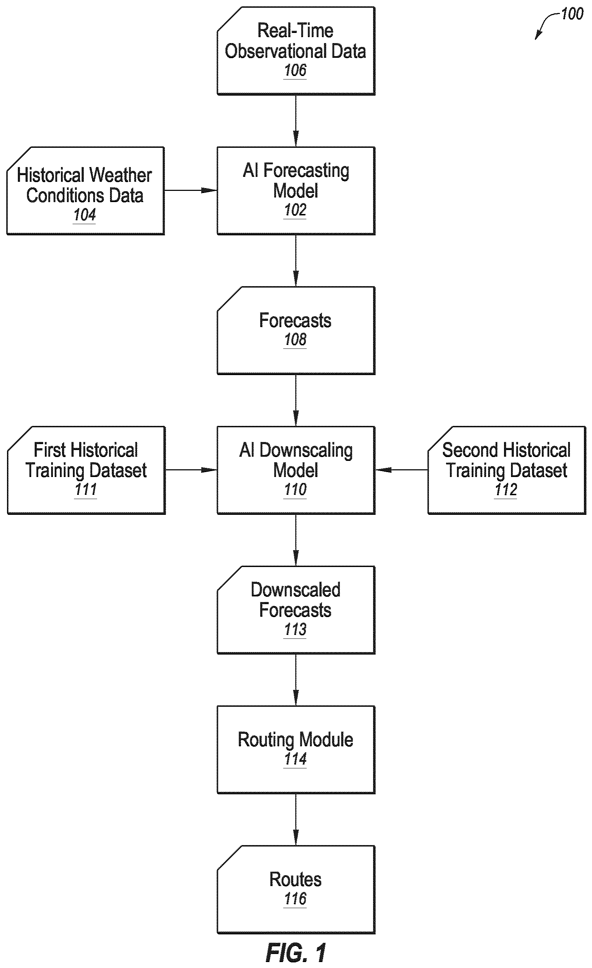

FIG. 1 illustrates an example system 100 configured to generate navigational routes for a vessel, in accordance with at least one embodiment of the present disclosure. In general, the system 100 may be configured to generate navigational routes 116 ("routes 116") for sea vessels such as a ship based on weather condition forecasts. The system 100 may be configured to determine the routes 116 for any types of ships or vessels. The system 100 may be implemented onsite at the vessels. Additionally or alternatively, the system 100 may be implemented at a remote location.

In some embodiments, the system 100 may include an artificial intelligence (AI) forecasting model 102 trained using a historical weather conditions dataset 104 ("historical dataset 104"). In some embodiments, the AI forecasting model 102 may be trained by an entity associated with the operation of a particular vessel. In other embodiments, the AI forecasting model 102 may be trained by a third-party entity not directly involved with the operation of the particular vessel. In some embodiments, the AI forecasting model 102 may be trained to be used by different vessels and/or entities. In some embodiments, the AI forecasting model 102 may include any suitable machine learning models such as deep learning accelerators (DLAs), neural networks, convolutional neural networks (CNNs), regional convolutional neural networks (RCNNs), generative models, physics-informed neural networks, transformers, neural operator models, etc.

In some embodiments, the historical dataset 104 may include historical ocean and weather analysis data obtained from various sources. For example, the historical dataset 104 may include historical ocean reanalysis data from WAVERYS and GLORYS data products offered by European Centre for Medium-Range Weather Forecasts (ECMWF). The historical dataset 104 may include such data over a time period. For example, the historical dataset 104 may include weather conditions data over five years, 10 years, fifteen years, twenty years, etc. In some embodiments, the historical dataset 104 may include a time lapse of weather conditions at various locations. Such time lapse of weather conditions may include barometric pressure, barometric pressure direction (rising or falling), rain, cloud coverage, ocean temperatures, swell size, wave height, current velocity, wave direction, storms, wind direction, wind velocity, currents and tides, lightning, precipitation, temperature, humidity, etc. In some embodiments, such time lapse of weather conditions may show how a certain condition at a certain location at a certain time may lead to and/or affect conditions at the certain location at a different time and/or conditions at various times at different locations.

In some embodiments, the AI forecasting model 102 may be tested and validated using a second historical dataset. In these and other embodiments, the second historical dataset may include historical weather conditions data over a time period not overlapping the time period corresponding to the historical dataset 104. For example, in an instance, the AI forecasting model 102 may be trained using the historical dataset including the weather conditions data over fifteen years (e.g., 1993-2018), in such instances, the second historical dataset may include weather conditions data from years excluding the fifteen years (e.g., 2018-2022). Such testing and validation process may help increase accuracy and/or efficiency of the AI forecasting model 102.

The AI forecasting model 102 may be trained and/or configured to receive data representing current weather or ocean states such as wave height, current velocity, wave direction, storms, wind direction, wind velocity, currents and tides, rain, lightning, precipitation, temperature, humidity, or cloud coverage. The AI forecasting model 102 may be configured to generate forecasts 108 including predictions for the weather or ocean conditions in next timesteps (e.g., after one hour, two hours, three hours, ten hours, etc.) based on the current weather or ocean states.

In some embodiments, the AI forecasting model 102 may be trained to generate the forecasts 108 in consideration of relationships between different geographical locations with respect to weather conditions. The relationships may represent how a weather condition in a geographical location affects weather conditions in other geographical locations. For example, a rain and/or high waves at a first location may lead to a rain, high waves, and/or other related weather conditions at a second location after a certain timelapse. The AI forecasting model 102 may predict the weather conditions at the second location at a certain time in the future based on the current weather conditions at the second location as well as the current weather conditions at the first location.

In some embodiments, the historical dataset 104 may include weather conditions data corresponding to the geographical areas travelled and/or associated with the vessels. For example, a particular vessel may generally travel certain areas (e.g., across the Pacific Ocean). The AI forecasting model 102 associated with or used for the particular vessel may be trained using the historical dataset 104 associated with the Pacific Ocean. Additionally or alternatively, the AI forecasting model 102 may be trained in a general or a geographically independent manner using the historical dataset 104 from various locations.

In some embodiments, the AI forecasting model 102 may be or include any types of suitable AI models. In some embodiments, the AI forecasting model 102 may include AI models that are grid-independent and resolution-independent. Grid-independent AI models learn mappings between function spaces rather than relying on a fixed grid. The AI models may convert spatial information into the frequency domain, in which the representation of functions is independent of the underlying grid structure, such that global features may be captured without being tied to specific grid points. Resolution independent AI models learn to represent functions at any resolution, such that solutions may be approximated regardless of the level of detail in the input data. The resolution independence may be useful in instances in which high-resolution data may not be available. In these and other embodiments, the AI forecasting model 102 may take in real-world observational data from various sources to generate a forecast on a regular structured grid. A regular structured grid is a systematic arrangement of points in a multi-dimensional space in which the spacing between points is uniform. The AI forecasting model 102 may take in data structured on a regular grid and/or data that is not structured on a regular grid to generate the weather condition forecasts on a specific grid format suitable for route planning. As an example, the AI forecasting model 102 may include an FNO-based AI model.

In some embodiments, the AI forecasting model 102 may be configured to obtain real-time observational data 106. The real-time observational data 106 may include observational data related to a certain location at a certain time (e.g., current time). For example, the real-time observational data 106 may include observational data related to a planned operational area of a vessel. The planned operational area may include areas between the vessel and a destination location of the vessel. The areas between the vessel and the destination location are not limited to direct path between the vessel and the destination location but include any area that the vessel may pass through to get to the destination location. In these and other embodiments, the real-time observational data 106 may include current or real-time observations or weather conditions specifically related to the areas between the vessel and the destination location. Additionally or alternatively, the real-time observational data 106 may include observations or weather conditions at locations that may affect the weather conditions in the areas between the vessel and the destination location.

In some embodiments, the real-time observational data 106 may include various types of data obtained using various types of sensors or devices. For example, the real-time observational data 106 may include data obtained using buoys, floats, saildrones, gliders, satellite observations, offshore sites, etc. In these and other embodiments, the real-time observational data 106 may include sea surface temperature, wave height and period, wind speed and direction, atmospheric pressure, current speeds and directions, pressure at different water depths, oceanic temperature, cloud cover and type, precipitation rates, etc. In some embodiments, the real-time observational data 106 may be obtained from one or more third-party sources (e.g., marine weather services, marine data providers, government and research institutions, coastal services, etc.) associated with such devices or sensors. Additionally or alternatively, the vessel may include one or more onboard sensors configured to obtain the real-time observational data 106 of areas in close proximity to the vessel.

The AI forecasting model 102 may be configured to generate the forecasts 108 based on the real-time observational data 106. The use of the real-time observational data 106 specifically corresponding to the planned operational area of the vessel may improve the accuracy of the forecasts 108 compared to taking an already generated generalized forecast for a large area (e.g., larger area including the planned operational area of the vessel) and extrapolating from the generalized forecast a forecast for a specific portion of the large area (e.g., the planned operational area of the vessel). For example, extrapolating the forecast for the specific portion from the generalized forecast may not provide accurate forecasts or information as the weather conditions may vary within the large area. The real-time observational data 106 may provide information for the AI forecasting model 102 to generate the forecasts 108 curated for the specific portion or the planned operational area of the vessel.

Additionally, the real-time observational data 106 may help the AI forecasting model 102 to generate the forecasts 108 in real-time. For example, the forecasts 108 may be updated in real time based on the real-time observational data 106. In some embodiments, the forecasts 108 may include predicted weather conditions at various timesteps for the planned operational areas of the vessel. For example, the AI forecasting model 102 may be configured to perform autoregressive prediction at specific timesteps to regularly generate the forecasts 108 at the timesteps. For example, the AI forecasting model 102 may be configured to generate the forecasts 108 on a regular, periodic basis of certain time intervals (e.g., every five, ten, thirty minutes, every hour, two hours, etc.). Such forecasts 108 generated based on the real-time observational data 106 may permit the forecasts 108 to be updated on a regular basis to reflect any changes in the real-time weather conditions. Such forecasts 108 may be more accurate and more reliable compared to forecasts 108 that are generated on a less regular basis (e.g., those that are generated every several hours or so).

In some embodiments, the AI forecasting model 102 may generate the forecasts 108 with a first resolution or a first grid. For example, the forecasts 108 for a particular area may be represented using a grid corresponding to the particular area. For example, the particular area may be covered using a grid having tiles of certain sizes, in which each tile represents the forecasts 108 for the area corresponding to each tile. In some embodiments, the forecasts 108 may have a first resolution. In some embodiments, the first resolution may be coarse or comparatively low. For example, the first resolution may be associated with low-resolution grids or tiles such as grid sizes equal to or greater than 20 km². In these and other embodiments, the AI forecasting model 102 may generate the forecasts 108 in such low resolutions due to lack of sufficient training data in high resolutions and/or to reduce computational burden on the AI forecasting model 102.

In some embodiments, the coarse-resolution forecasts 108 may not be adequate or detailed enough to generate routes 116 at a target level of accuracy. In these and other embodiments, the system 100 may include an AI downscaling model 110. The AI downscaling model 110 may include any suitable machine learning models such as deep learning accelerators (DLAs), neural networks, convolutional neural networks (CNNs), regional convolutional neural networks (RCNNs), generative models, physics-informed neural networks, transformers, neural operator models, etc.

The AI downscaling model 110 may be configured to obtain the forecasts 108 with the first resolution and generate downscaled forecasts 113. The downscaled forecasts 113 may include the forecasts 108 with a second resolution, in which the second resolution is higher than the first resolution. For example, the second resolution may be comparatively higher than the first resolution, such as having grid sizes equal to or less than 1 km². For example, each 20 km² grid may be divided into multiple grids of 1 km² sizes such that varying forecasts or weather condition forecasts within each 20 km² grid may be represented.

The AI downscaling model 110 may be trained using a first historical training dataset 111 including weather conditions data with a first resolution and a second historical training dataset 112 including weather conditions data with a second resolution. In some embodiments, the first historical training dataset 111 and the second historical training dataset 112 may correspond to historical weather conditions data corresponding to generally the same location and/or time. For example, the first historical training dataset 111 may represent the weather conditions data for a particular location in the first resolution and the second historical training dataset 112 may represent the weather conditions data for the particular location in the second resolution. The AI downscaling model 110 may be trained to obtain weather conditions data and/or forecasts 108 in the first resolution and generate the downscaled forecasts 113 in the second resolution.

In some embodiments, the system 100 may include a routing module 114 configured to generate the routes 116 based on the downscaled forecasts 113. For example, the routing module 114 may be configured to determine one or more routes 116 between the vessel and the destination location. The routing module 114 may be configured to generate the one or more routes 116 such that the routes 116 are optimized with respect to the downscaled forecasts 113. For example, the routes 116 may avoid areas with weather conditions that may affect operations of the vessel. For instance, the routes 116 may avoid areas having high waves, storms, etc. that may affect the operations of the vessel. In these and other embodiments, the vessel may operate the planned operational area based on the one or more routes 116.

In some embodiments, the routing module 114 may include code and routines configured to allow a computing system to perform one or more operations corresponding to the routing module 114. Additionally or alternatively, the routing module 114 may be implemented using hardware including one or more processors, a microprocessor, a microcontroller, a digital signal processor (DSP), an application-specific integrated circuit (ASIC), a Field-Programmable Gate Array (FPGA), or any other digital or analog circuitry configured to interpret and/or to execute program instructions and/or to process data. Further, reference to operations that are performed by the routing module 114 may include operations that the routing module 114 causes some other component to perform.

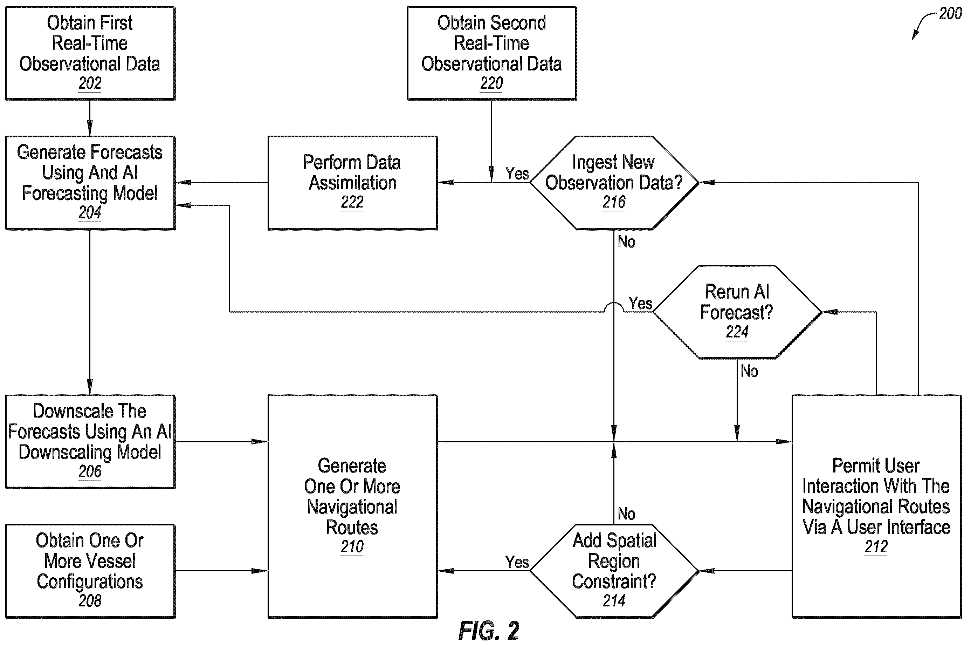

In some embodiments, the routes 116 may be modified and/or regenerated based on newly obtained real-time observational data. For instance, the weather conditions may change after the routing module 114 determines the routes 116, such that new and/or revised routes may be warranted. In such instances, the AI forecasting module 102 may be configured to regenerate the forecasts 108 based on the newly obtained real-time operational data, such that the routing module 114 may revise and/or regenerate the routes 116. The operations with respect to the regeneration and/or revision of the routes may be described in further detail with respect to FIG. 2 of the present disclosure.

Modifications, additions, or omissions may be made to the system 100 without departing from the scope of the present disclosure. For example, in some embodiments, the system 100 may include any number of other components that may not be explicitly illustrated or described.

For example, although FIG. 1 is generally described with respect to sea vessels, the same principles described herein may be used for route planning of other vehicles. For example, the forecasts 108 may be generated with respect to automobiles, trucks, aircraft, etc. The forecasts 108 may be used to generate specific routes that may be safe and/or efficient for the automobiles, trucks, aircraft, etc. For example, in response to the forecast 108 indicating presence of heavy storms, a navigational route for an airplane may be determined or modified to avoid the storms.

FIG. 2 illustrates a flow diagram of an example method 200 of navigational route planning based on real-time weather data, arranged in accordance with at least one embodiment of the present disclosure. Particularly, the method 200 may include determining to feed or ingest additional real-time weather data. In some embodiments, one or more operations of the method 200 may be implemented by any suitable element of a weather forecasting and route determination system such as the system 100 of FIG. 1. Although illustrated as discrete steps, various steps of the method 200 may be divided into additional steps, combined into fewer steps, or eliminated, depending on the desired implementation. Additionally, the order of performance of the different steps may vary depending on the desired implementation.

At block 202, first real-time observational data may be obtained. In some embodiments, the first real-time observational data may correspond to the real-time observational data 106 of FIG. 1. The first real-time observational data may include weather conditions data corresponding to planned operational areas of a vessel. In some embodiments, the first real-time observational data may include weather conditions data outside of the planned operational areas that may have an impact on the weather conditions of in the planned operational areas.

At block 204, an AI forecasting model may be configured to generate forecasts or weather condition predictions based on the first real-time observational data. The AI forecasting model may correspond to the AI forecasting model 102 of FIG. 1. The AI forecasting model may be trained and/or configured to generate forecasts or weather condition predictions for an area based on the first real-time observational data. In some embodiments, the forecasts may correspond to the forecasts 108 of FIG. 1.

At block 206, an AI downscaling model (e.g., the AI downscaling model 110 of FIG. 1) may obtain the forecasts generated using the AI forecasting model and downscale the forecasts. For example, the AI downscaling model may be configured to increase and/or improve the resolution of the forecasts, such that the forecasts are more suitable for route generation. The AI downscaling model may be trained using a first historical training dataset having a first resolution and a second historical training dataset having a second resolution, in which the second resolution is higher than the first resolution. In some embodiments, the first historical training dataset and the second historical training dataset may be associated with generally same geographical location and time such that the second historical training dataset include the substantially same weather conditions data as the first historical training dataset, but in higher resolution.

At block 208, one or move vessel configurations may be obtained. The vessel configurations may include various factors of the vessel that may affect routing such as to design, capability, and/or operational characteristics of the vessel. Different vessel configurations may impose different restrictions and/or constraints in routing. For example, different sea vessel types and sizes may have varying draft restrictions, bridge clearances, and/or port access limitations. Different vessels may have different engine types and fuel efficiency. The vessels may also have varying navigational constraints with respect to shallow waters, narrow straits, etc. Additionally or alternatively, different vessels may be subject to different regulations and/or safety requirements. The vessel configurations may include any other characteristics of the vessel that may affect navigational routing for the vessel.

At block 210, one or more navigational routes may be generated based on the downscaled forecasts and the one or more vessel configurations. For example, the downscaled forecasts may provide forecasted weather conditions at different regions that may affect route planning. The downscaled forecasts may provide such forecasted weather conditions with more details or granularity. In some embodiments, the one or more navigational routes may be generated using a routing module such as the routing module 114 of FIG. 1. In some embodiments, the one or more navigational routes may represent routes that a vessel may follow to reach a destination location. The one or more navigational routes may present routes that are optimized with respect to safety and efficiency of travel by the vessel, based on the forecasts and the vessel configurations. For instance, the navigational routes may include regions associated with forecasts that helps or does not negatively impact the operations of the vessels. For instance, the navigational routes may avoid areas that negatively impact the operations of the vessels. In these and other embodiments, the downscaled forecasts may permit the routing module to avoid regions in smaller bits as the downscaled forecasts provide varying forecasts for smaller areas.

At block 212, user interaction with the one or more navigational routes maybe permitted via a user interface. For example, the one or more navigational routes may be presented on the user interface to permit user interaction. In some embodiments, the user interface may include a computing device with a display to display the one or more navigational routes. In some embodiments, the user interface may be located onboard the vessel. In other embodiments, the user interface may be located at a remote location. In some embodiments, the user interactions may include operations modifying and/or revising the one or more navigational routes.

For example, at block 214, the user may introduce and/or add constraints or additional data to be provided to the routing module or the AI forecasting model, via the user interface. For example, the user may provide one or more spatial region constraints for the routing module. The spatial region constraints may include region or area specific constraints for the routing module to consider. For example, the spatial region constraints may include certain areas to avoid (e.g., known dangerous and/or unsuitable areas for travel) and/or preferred areas. In response to the user providing new spatial region constraints, the routing module may regenerate and/or modify the one or more routes in consideration of the new spatial region constraints.

In some embodiments, the user may determine that the first observational data is outdated due to changes in the weather conditions and/or passage of time. In these and other embodiments, at block 216, the user may determine whether to feed new observational data to the AI forecasting model. In response to determining to feed new observational data, the user may specify a timestep at which the new observational data may be obtained. The timestep may specify particular times to obtain the new observational data. For example, the particular times may include every hour, every three hours, every five hours, etc. In some embodiments, the timestep may specify a one-time occasion of obtaining the new observational data. In response to determining that new observational data is not needed (e.g., no substantial change in the weather is observed), the one or more navigational routes may be unmodified.

In response to the user indicating obtaining the new observational data, new or second real-time observational data may be obtained at block 220. In some embodiments, the second real-time observational data may be obtained from the same source as the first real-time observational data. In other embodiments, the second real-time observational data may be obtained from different sources from the first real-time observational data.

At block 222, a model-free data assimilation may be performed. The model-free data assimilation may include incorporating the second real-time observational data to the AI forecasting model to improve forecasting or predictions without relying on a complex computational model. In these and other embodiments, any suitable data assimilation techniques or methods may be used. For example, in some embodiments, a data fusion via ensemble Kalman Filtering (EnKF) technique may be used to provide the second real-time observational data to the AI forecasting model such that the AI forecasting model may regenerate a new field to continue the autoregressive forecast quality for longer time spans. In some embodiments, other data assimilation techniques such as ensemble forecasting, Bayesian data fusion, kernel methods, etc. may be used.

In response to the second real-time observational data being assimilated to the AI forecasting model, the user may initiate, via the user interface, rerun of the AI forecasting model at block 224. For example, the AI forecasting model may be rerun to generate new and/or modified weather condition forecasts based on the second real-time observational data.

In some embodiments, the steps or blocks of the method 200 may be repeated until satisfactory navigational routes are generated, the user does not notice substantial changes to the weather conditions, and/or the vessel reaches the destination location. In some embodiments, the steps or blocks of the method 200 may be performed without user interactions. For example, in some embodiments, the steps of the method 200 may be automatically repeated at a certain time interval. For instance, the new real-time data (e.g., the second real-time observational data) may be regularly ingested at the certain time interval (e.g., every five minutes, ten minutes, fifteen minutes, thirty minutes, hour, two hours, etc.).

Additionally or alternatively, in some embodiments, the routes may be assigned a safety and/or an efficiency score (e.g., a number between 0 and 100 in which higher number represents better safety and/or efficiency). For example, a scoring module or a scoring AI model may be used to assign the scores to the one or more navigational routes. The scores may be compared against a predefined safety threshold and/or a predefined efficiency threshold. In response to the scores not satisfying the thresholds (e.g., being less than the thresholds), the method 200 may proceed to feed the new observational data to the AI forecasting model (e.g., at block 216).

Modifications, additions, or omissions may be made to the method 200 without departing from the scope of the disclosure. For example, the operations of the method 200 may be implemented in differing order. Additionally or alternatively, two or more operations may be performed at the same time. Furthermore, the outlined operations and actions are provided as examples, and some of the operations and actions may be optional, combined into fewer operations and actions, or expanded into additional operations and actions without detracting from the essence of the disclosed embodiments.

For example, although FIG. 2 is described with respect to vessels (e.g., sea vessels), the same principles described herein may be used for route planning of other vehicles. For example, the forecasts 108 may be generated with respect to automobiles, trucks, aircraft, etc. The forecasts 108 may be used to generate specific routes that may be safe and/or efficient for the automobiles, trucks, aircraft, etc. For example, in response to the forecast 108 indicating presence of heavy storms, a navigational route for an airplane may be determined or modified to avoid the storms.

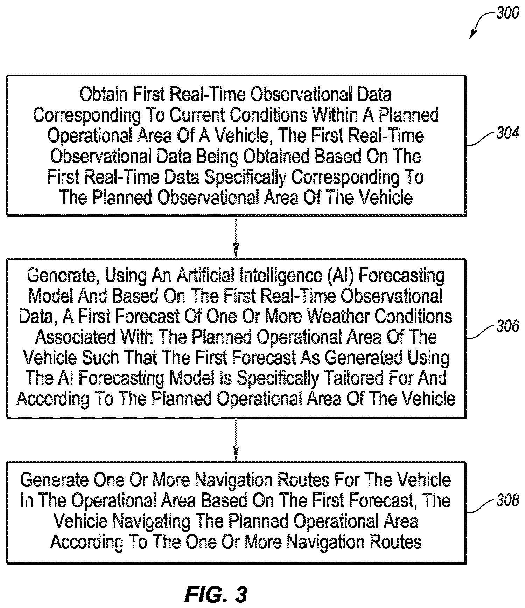

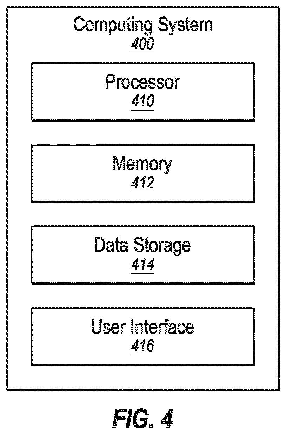

FIG. 3 illustrates a flow chart of an example method 300 of weather forecasting and route determination, arranged in accordance with at least one embodiment of the present disclosure. One or more operations of the method 300 may be implemented by any suitable system such as the system 100 of FIG. 1 and/or computing system 400 of FIG. 4. Although illustrated as discrete steps, various steps of the method 300 may be divided into additional steps, combined into fewer steps, or eliminated, depending on the desired implementation. Additionally, the order of performance of the different steps may vary depending on the desired implementation. In some embodiments, the method 300 may be described with respect to a vehicle. The vehicle described in the method 300 may include various types of vehicles, such as ships, vessels, aircraft, automobiles, motorcycles, etc.

In some embodiments, the method 300 may include a block 302. At block 302, an artificial intelligence (AI) forecasting model may be trained to forecast weather conditions using an historical weather conditions dataset. The AI forecasting model may correspond to the AI forecasting model 102 of FIG. 1, and the historical weather conditions dataset may correspond to the first historical training dataset 111 of FIG. 1. In some embodiments, the weather conditions may include wave height, current velocity, wave direction, storms, wind direction, wind velocity, currents and tides, rain, lightning, precipitation, temperature, humidity, or cloud coverage.

At block 304, first real-time observational data corresponding to current conditions within a planned operational area of a vehicle may be obtained. The current conditions may include various weather conditions and/or ocean conditions at the time of observation. In some embodiments, the first real-time observational data may be obtained based on the first real-time data specifically corresponding to the planned observational area of the vehicle. The planned observational area may include areas between the vehicle and destination location of the vehicle. For example, the planned observational area may include areas that the vehicle may potentially travel to reach the destination location.

In some embodiments, the real-time observational data may include current conditions at locations that may not be in the planned operational area of the vehicle but may have an impact on the weather conditions in the planned operational area of the vehicle. For example, weather conditions at a first location (e.g., not in the operational area of the vehicle) may have an impact at a second location (e.g., the operational area of the vehicle) after certain time lapse. For example, a storm in the first location may commonly travel to the second location after a certain time period. In such instances, the real-time observational data may include the current conditions at the first location.

At block 306, a first forecast of one or more weather conditions associated with the planned operational area of the vehicle may be generated using the AI forecasting model and based on the first real-time observational data. In some embodiments, the first forecast as generated using the AI forecasting model may be specifically tailored for and according to the planned operational area of the vehicle.

In some embodiments, the first forecast may include weather conditions data in a first resolution. In some embodiments, the first resolution may be relatively low or coarse. For example, the detail level of data in the first forecast may be low or sparse. Particularly, the first forecast may be generated based on a large grid size or dimension, in which each cell of the grid represents specific geographic coordinates. For example, the first forecast may be represented on a grid in which each cell in the grid represents 20km² geographical areas and/or corresponding coordinates.

In some embodiments, the first forecast may be downscaled. For example, the grid size of the first forecast may be decreased such that the resolution of the first forecast may be improved. In some embodiments, an AI downscaling model may be used to downscale the first forecast. The AI downscaling model may be trained using a first historical training dataset including weather conditions data with the first resolution and a second historical training dataset including weather conditions data with a second resolution. In these and other embodiments, the first resolution may be lower in resolution than the second resolution. For example, the second resolution may be represented using a grid size that is smaller than the first resolution and represent the weather conditions with more detail. For example, the second resolution may be represented on a grid size of 1km².

In these and other embodiments, the AI downscaling model may be configured to obtain the first forecasts in the first resolution from the AI forecasting model. The AI downscaling model may convert the first resolution of the first forecasts to the second resolution. The downscaled forecasts may be more suitable for route generation as more accurate routes may be determined based on forecasts data with higher resolutions or more detail.

At block 308, one or more navigation routes for the vehicle in the operational area may be generated based on the first forecast, the vehicle navigating the planned operational area according to the one or more navigation routes. In some embodiments, the one or more navigation routes may be presented on a user interface to permit a user to interact with the one or more navigation routes. In some embodiments, the user interface may present additional information about the one or more navigation routes such as estimated time, fuel efficiency, etc.

Modifications, additions, or omissions may be made to the method 300 without departing from the scope of the disclosure. For example, the operations of the method 300 may be implemented in differing order. Additionally or alternatively, two or more operations may be performed at the same time. Furthermore, the outlined operations and actions are provided as examples, and some of the operations and actions may be optional, combined into fewer operations and actions, or expanded into additional operations and actions without detracting from the essence of the disclosed embodiments.

For example, the method 300 may further include obtaining, via the user interface, a user input indicating a selection to obtain second real-time observational data. In some embodiments, the second real-time observational data may correspond to current conditions within the one or more navigation routes. The user may indicate to obtain the second real-time observational data in response to identifying substantial or noticeable changes in the weather conditions such that new forecasts may be warranted.

In response to the user selection, the second real-time observational data corresponding to the current conditions within the one or more navigation routes may be obtained. The AI forecasting model may generate a second forecast of one or more weather conditions associated with the one or more navigation routes based on or in consideration of the second real-time observational data. In these and other embodiments, one or more updated navigation routes may be generated for the vehicle in the planned operational area of the vehicle based on the second forecast, the vehicle navigating the area according to the one or more updated navigation routes.

The method 300 may be performed for various types of vehicles. For instance, the method 300 may be performed with respect to ships, boats, automobiles, trucks, buses, bicycles, trains, aircraft, motorcycles, off-highway vehicles, etc. The navigational routes may vary depending on the types of the vehicles. For example, the navigational routes may include waterways, roadways, railways, air routes, off-road trails, etc.

FIG. 4 illustrates a block diagram of an example computing system 400 that may be used with respect to a weather forecasting and route determination system, according to at least one embodiment of the present disclosure. For example, the computing system 400 may be used to generate navigation routes for a vehicle.

The computing system 400 may include a processor 410, a memory 412, a data storage 414, and a user interface 416. The processor 410, the memory 412, the data storage 414, and the user interface may be communicatively coupled.

In general, the processor 410 may include any suitable special-purpose or general-purpose computer, computing entity, or processing device including various computer hardware or software modules and may be configured to execute instructions stored on any applicable computer-readable storage media. For example, the processor 410 may include a microprocessor, a microcontroller, a digital signal processor (DSP), an application-specific integrated circuit (ASIC), a Field-Programmable Gate Array (FPGA), or any other digital or analog circuitry configured to interpret and/or to execute program instructions and/or to process data. Although illustrated as a single processor in FIG. 4, the processor 410 may include any number of processors configured to, individually or collectively, perform or direct performance of any number of operations described in the present disclosure. Additionally, one or more of the processors may be present on one or more different electronic devices, such as different servers.

In some embodiments, the processor 410 may be configured to interpret and/or execute program instructions and/or process data stored in the memory 412, the data storage 414, or the memory 412 and the data storage 414. In some embodiments, the processor 410 may fetch program instructions from the data storage 414 and load the program instructions in the memory 412. After the program instructions are loaded into memory 412, the processor 410 may execute the program instructions.

The memory 412 and the data storage 414 may include computer-readable storage media for carrying or having computer-executable instructions or data structures stored thereon. Such computer-readable storage media may include any available media that may be accessed by a general-purpose or special-purpose computer, such as the processor 410. By way of example, and not limitation, such computer-readable storage media may include tangible or non-transitory computer-readable storage media including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices), or any other storage medium which may be used to store particular program code in the form of computer-executable instructions or data structures and which may be accessed by a general-purpose or special-purpose computer. Combinations of the above may also be included within the scope of computer-readable storage media. Computer-executable instructions may include, for example, instructions and data configured to cause the processor 410 to perform a certain operation or group of operations.

The user interface 416 may include any device to allow a user to interface with the computing system 400. For example, the user interface 416 may include a mouse, a track pad, a keyboard, buttons, camera, and/or a touchscreen, among other devices. The user interface 416 may receive input from a user and provide the input to the processor 410.

Modifications, additions, or omissions may be made to the computing system 400 without departing from the scope of the present disclosure. For example, in some embodiments, the computing system 400may include any number of other components that may not be explicitly illustrated or described.

Terms used in the present disclosure and especially in the appended claims (e.g., bodies of the appended claims) are generally intended as "open" terms (e.g., the term "including" should be interpreted as "including, but not limited to," the term "having" should be interpreted as "having at least," the term "includes" should be interpreted as "includes, but is not limited to," etc.).

Additionally, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations.

In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." or "one or more of A, B, and C, etc." is used, in general such a construction is intended to include A alone, B alone, C alone, A and B together, A and C together, B and C together, or A, B, and C together, etc. Additionally, the use of the term "and/or" is intended to be construed in this manner.

Further, any disjunctive word or phrase presenting two or more alternative terms, whether in the description, claims, or drawings, should be understood to contemplate the possibilities of including one of the terms, either of the terms, or both terms. For example, the phrase "A or B" should be understood to include the possibilities of "A" or "B" or "A and B" even if the term "and/or" is used elsewhere.

All examples and conditional language recited in the present disclosure are intended for pedagogical objects to aid the reader in understanding the present disclosure and the concepts contributed by the inventor to furthering the art, and are to be construed as being without limitation to such specifically recited examples and conditions. Although embodiments of the present disclosure have been described in detail, various changes, substitutions, and alterations could be made hereto without departing from the spirit and scope of the present disclosure.

## Claims

1. A method comprising:
obtaining first real-time observational data corresponding to current conditions within an operational area of a vehicle, the first real-time observational data being obtained based on the first real-time observational data corresponding to the operational area of the vehicle;
generating, using an artificial intelligence (AI) forecasting model and based on the first real-time observational data, a first forecast of one or more weather conditions associated with the operational area of the vehicle such that the first forecast is tailored for and according to the operational area of the vehicle; and
generating one or more navigation routes for the vehicle in the operational area based on the first forecast, the vehicle navigating the operational area according to the one or more navigation routes.

2. The method of claim 1, further comprising:
prior to obtaining the first real-time observational data corresponding to the current conditions within the operational area of the vehicle:
training the AI forecasting model to forecast weather conditions using an historical weather conditions dataset.

3. The method of claim 1, further comprising:
obtaining second real-time observational data corresponding to the current conditions within the one or more navigation routes;
generating, using the AI forecasting model and based on the second real-time observational data, a second forecast of one or more weather conditions associated with the one or more navigation routes; and
generating one or more updated navigation routes for the vehicle in the operational area based on the second forecast, the vehicle navigating the area according to the one or more updated navigation routes.

4. The method of claim 3, further comprising:
prior to obtaining the second real-time observational data:
obtaining, via a user interface, a user input indicating a selection to obtain the second real-time observational data.

5. The method of claim 4, wherein the user input indicates a timestep to feed the second real-time observational data to the AI forecasting model.

6. The method of claim 1, further comprising:
prior to generating the one or more navigation routes:
downscaling, using an AI downscaling model, the first set of forecasts.

7. The method of claim 6, wherein downscaling the first set of forecasts comprises:
training the AI downscaling model using a first historical training dataset including weather conditions data with a first resolution and a second historical training dataset including weather conditions data with a second resolution, wherein the first resolution is lower in resolution than the second resolution;
obtaining the first set of forecasts in the first resolution from the AI forecasting model;
and
converting, using the AI downscaling model, the first resolution of the first set of forecasts to the second resolution.

8. The method of claim 7, wherein the weather conditions data with the first resolution includes data with a grid size equal to or exceeding 20 km².

9. The method of claim 7, wherein the weather conditions data with the second resolution includes data with a grid size equal to or less than 1 km².

10. The method of claim 1, wherein the weather conditions include one or more of: wave height, current velocity, wave direction, storms, wind direction, wind velocity, currents and tides, rain, lightning, precipitation, temperature, humidity, or cloud coverage.

11. A system comprising:
one or more processors configured to perform operations comprising:
obtaining first real-time observational data corresponding to current conditions within an operational area of a vehicle, the first real-time observational data being obtained based on the first real-time observational data corresponding to the operational area of the vehicle;
generating, using an artificial intelligence (AI) forecasting model and based on the first real-time observational data, a first forecast of one or more weather conditions associated with the operational area of the vehicle such that the first forecast is tailored for and according to the operational area of the vehicle; and
generating one or more navigation routes for the vehicle in the operational area based on the first forecast, the vehicle navigating the operational area according to the one or more navigation routes.

12. The system of claim 11, the operations further comprising:
prior to obtaining the first real-time observational data corresponding to the current conditions within the operational area of the vehicle:
training the AI forecasting model to forecast weather conditions using an historical weather conditions dataset.

13. The system of claim 11, the operations further comprising:
obtaining second real-time observational data corresponding to the current conditions within the one or more navigation routes;
generating, using the AI forecasting model and based on the second real-time observational data, a second forecast of one or more weather conditions associated with the one or more navigation routes; and
generating one or more updated navigation routes for the vehicle in the operational area based on the second forecast, the vehicle navigating the area according to the one or more updated navigation routes.

14. The system of claim 13, the operations further comprising:
prior to obtaining the second real-time observational data:
obtaining, via a user interface, a user input indicating a selection to obtain the second real-time observational data.

15. The system of claim 14, wherein the user input indicates a particular timestep to feed the second real-time observational data to the AI forecasting model.

16. The system of claim 11, the operations further comprising:
prior to generating the one or more navigation routes:
downscaling, using an AI downscaling model, the first set of forecasts.

17. The system of claim 16, wherein downscaling the first set of forecasts comprises:
training the AI downscaling model using a first historical training dataset including weather conditions data with a first resolution and a second historical training dataset including weather conditions data with a second resolution, wherein the first resolution is lower in resolution than the second resolution;
obtaining the first set of forecasts in the first resolution from the AI forecasting model; and
converting, using the AI downscaling model, the first resolution of the first set of forecasts to the second resolution.

18. The system of claim 17, wherein the weather conditions data with the first resolution includes data with a grid size equal to or exceeding 20 km².

19. The system of claim 17, wherein the weather conditions data with the second resolution includes data with a grid size equal to or less than 1 km².

20. One or more non-transitory computer-readable media storing instructions that, when executed by one or more processors, cause a system to perform operations, the operations comprising:
obtaining first real-time observational data corresponding to current conditions within an operational area of a vehicle, the first real-time observational data being obtained based on the first real-time observational data corresponding to the operational area of the vehicle;
generating, using an artificial intelligence (AI) forecasting model and based on the first real-time observational data, a first forecast of one or more weather conditions associated with the operational area of the vehicle such that the first forecast is tailored for and according to the operational area of the vehicle; and
generating one or more navigation routes for the vehicle in the operational area based on the first forecast, the vehicle navigating the operational area according to the one or more navigation routes.
